(19)

Europäisches Patentamt
European Patent Office
Office européen des brevets

(11) **EP 3 273 274 A1**

(12) **EUROPEAN PATENT APPLICATION**

(43) Date of publication:
24.01.2018  Bulletin 2018/04

(51) Int Cl.:
*G01V 1/28* (2006.01)　　　*G01V 1/30* (2006.01)

(21) Application number: **17305859.5**

(22) Date of filing: **03.07.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **18.07.2016  US 201662363357 P**

(71) Applicant: **CGG Services SAS**
**91300 Massy (FR)**

(72) Inventor: **SOUBARAS, Robert**
**91300 MASSY (FR)**

(74) Representative: **Petit, Maxime**
**Ipsilon**
**Le Centralis**
**63, avenue du Général Leclerc**
**92340 Bourg-la-Reine (FR)**

(54) **DEVICE AND METHOD FOR ESTIMATING PRE-STACK WAVELET MODEL FROM SEISMIC GATHERS**

(57)　Computing device, computer instructions and method (1600) for calculating a characteristic of the earth based on recorded seismic data related to a subsurface. The method includes receiving (1602) well log data; calculating (1606) a statistical model based on the well log data; calculating (1612) a reflectivity R of the subsurface based on an intercept A and a gradient B of the statistical model; calculating (1614) a reconstructed gather D based on the reflectivity R and a wavelet model W; calculating (1620) parameters $W_n$ of the wavelet model W with a first inversion function C that depends on (i) the reconstructed gather D, (ii) a recorded gather $D_0$, and (iii) a probability density function (pdf) associated with the statistical model; and calculating (1626) the characteristic of the earth for the subsurface, based on the parameters $W_n$ of the wavelet model W and the recorded gather $D_0$.

FIG. 6

```
600  Receive log data
 ↓
602  Calculate statistical model
 ↓
604  Perform separation of intercept and gradient of
     statistical model
 ↓
606  Calculate wavelet model
 ↓
608  Apply insertion to wavelet model
 ↓
610  Process seismic data with wavelet model
 ↓
612  Calculate characteristic of earth and/or image
```

EP 3 273 274 A1

## Description

### CROSS-REFERENCE TO RELATED APPLICATIONS

The present application claims the benefit of priority to U.S. Provisional Application No. 62/363,357, entitled "Method for estimating a pre-stack wavelet model from seismic gathers," filed on July 18, 2016. The entire content of the above document is hereby incorporated by reference into the present application.

### BACKGROUND

### TECHNICAL FIELD

Embodiments of the subject matter disclosed herein generally relate to methods and systems and, more particularly, to mechanisms and techniques for determining a reliable wavelet model for processing seismic data and determining various characteristics of the earth.

### DISCUSSION OF THE BACKGROUND

Interest in developing new oil and gas production fields has steadily increased. However, with the fall in oil prices, the oil companies are looking to reduce the cost associated with the oil detection and exploration. Thus, those engaged in such a costly undertaking invest substantially in geophysical surveys in order to more accurately figure out where or where not to drill a well.

Seismic data acquisition (marine and land) and processing generate a profile (image) of the geophysical structure (subsurface). The image may show not only the various layers underground, but various other characteristics of the earth. While this image does not provide an accurate location for oil and gas, it suggests, to those trained in the field, the presence or absence of oil and/or gas. Thus, improving the resolution of images of subsurface structures is an ongoing technological process.

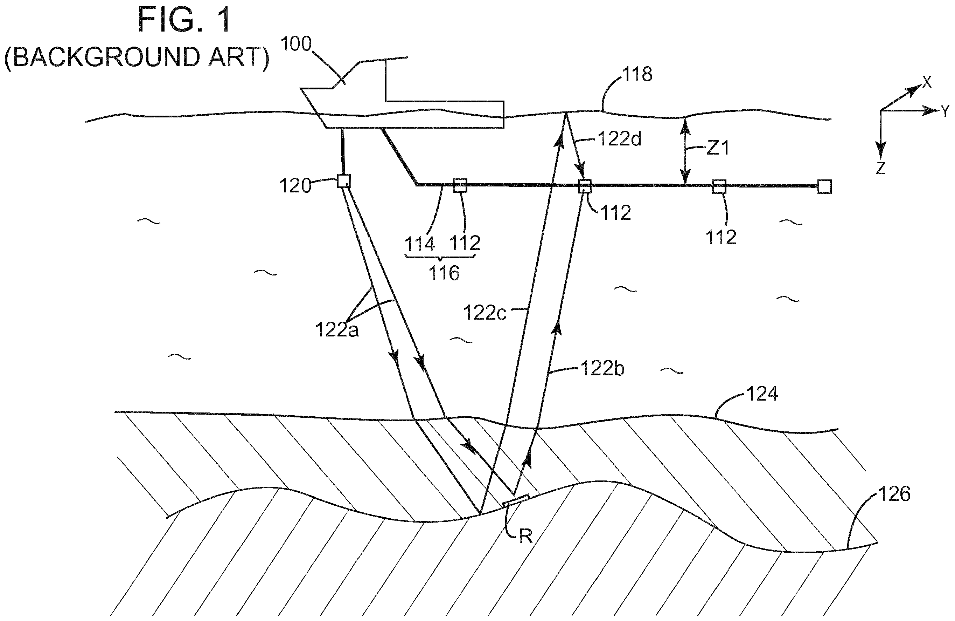

Seismic data acquisition is the first step toward generating the image. Next, the seismic data is processed for generating the image of the subsurface and/or calculating one or more characteristics of the earth. Thus, a marine system and a land system for acquiring seismic data are briefly discussed herein. During a marine seismic gathering process, as shown in Figure 1, a vessel 100 tows plural detectors 112. The plural detectors 112 are disposed along a cable 114. Cable 114 together with its corresponding detectors 112 are sometimes referred to, by those skilled in the art, as a streamer 116. Vessel 100 may tow plural streamers 116 at the same time. The streamers may be disposed horizontally, i.e., lying at a constant depth $z_1$ relative to the surface 118 of the ocean. Alternatively, the plural streamers 116 may form a constant angle (i.e., the streamers may be slanted) with respect to the surface of the ocean or they may be curved.

Vessel 100 may also tow a seismic source 120 configured to generate an acoustic wave 122a. The acoustic wave 122a propagates downward and penetrates the seafloor 124, eventually being reflected by a subsurface 126. The reflected acoustic wave 122b propagates upward and is detected by detector 112. For simplicity, Figure 1 shows only two paths 122a corresponding to the acoustic wave. However, the acoustic wave emitted by the source 120 may be substantially a spherical wave, e.g., it propagates in all directions starting from the source 120. Parts of the reflected acoustic wave 122b (primary) are recorded by the various detectors 112 (the recorded signals are called traces) while parts of the reflected wave 122c pass the detectors 112 and arrive at the water surface 118. Since the interface between the water and air is well approximated as a quasi-perfect reflector (i.e., the water surface acts as a mirror for the acoustic waves), the reflected wave 122c is reflected back toward the detector 112 as shown by wave 122d in Figure 1. Wave 122d is normally referred to as a ghost wave because this wave is due to a spurious reflection. The ghosts are also recorded by the detector 112, but with a reverse polarity and a time lag relative to the primary wave 122b. The traces may be used to determine the subsurface 126 (i.e., earth structure below surface 124).

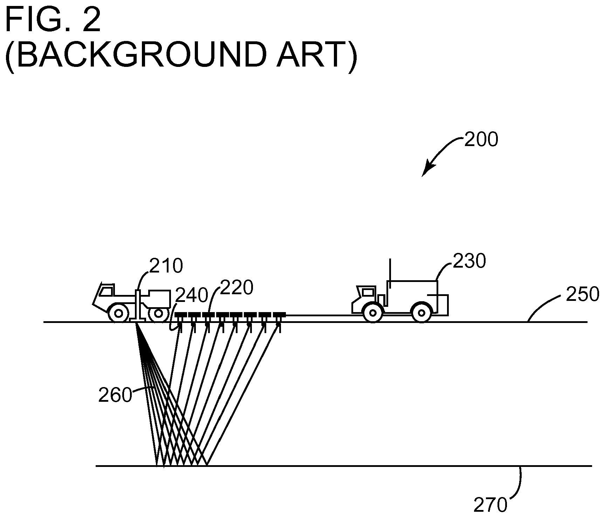

On land, a seismic acquisition system 200, which is illustrated in Figure 2, may include a source 210 (e.g., a vibratory source) that generates seismic waves 260, receivers 220 (e.g., geophones) for detecting the seismic reflections, and a recorder 230. Recorder 230 is configured to record electrical signals or seismic data resulting from sampling electrical signals generated by receivers 220 upon detecting seismic reflections. To perform the seismic survey, source 210, receivers 220 and recorder 230 are positioned on ground surface 250. However, source 210 and recorder 230, being carried on trucks, may be repositioned, while receivers 220 are usually arranged over the surveyed geological structure along receiver lines.

In operation, source 210 generates seismic waves that may include surface waves 240 and body waves 260 that may be partially reflected at an interface 270 between two geological layers inside which the seismic waves propagate with different speeds. Each receiver 220 receives the full wavefield (i.e., both surface and body waves) and converts it into an electrical signal.

One way to extract the desired information from the acquired seismic data is to use a seismic elastic inversion. Seismic elastic inversion is a process that takes as input a pre-stack processed seismic dataset. To do so, the elastic inversion process needs a pre-stack wavelet model $W(t, \theta)$. Note that the term "stack" is defined as summing traces to improve the signal-to-noise ratio, reduce noise and improve seismic data quality. For example, traces from different shot records with a common reflection point, such as common midpoint (CMP) data, are stacked to form a single trace during seismic processing. Stacking reduces the amount of data by a factor called the fold.

There are mainly two known methods to obtain this wavelet model. The first one is a deterministic local method that can be used at a given surface position (x,y), where a well has been drilled and well logs are available. The well logs (or well log data) include measured P velocities $V_P(t)$, S velocities $V_S(t)$, and density p(t) that can be used to compute, among other things, the reflectivity of the subsurface. With this information, the wavelet model can be computed by deterministic matching of the reflectivity R with the gather $D_0$. However, for a given seismic survey, only a few wells at most are available, and thus, the wavelet computed at a surface location (x,y) has to be considered invariant over a large surface area, which is a source of inaccuracies, i.e., a drawback. Another drawback of this method is that well logs are usually short, which makes the low frequencies of the wavelet difficult to estimate.

When wells cannot be used, a second method (statistical method) is used to output a zero-phase wavelet for a certain number of angle stacks. The gathers are summed over several angle ranges (for example, three angle ranges $\theta=(0°,15°)$, $\theta=(15°,30°)$, and $\theta=(30°,45°)$), thus producing angle stacks $S_i(t)$. The amplitude spectrum of each angle stack can be computed over an extended surface area, which allows a zero-phase wavelet to be estimated for each angle range, by using the white reflectivity assumption. This allows the estimation of a piecewise constant zero-phase wavelet model.

The advantage of this second method is that it can be used without wells (or far from the wells). However, the drawbacks of this second method are related to the assumption of a zero-phase reflectivity, the fact that the data is supposed to be zero-phased and the fact that the spectrum of the noise is included in the computation of the wavelet spectrum.

Thus, despite the utility of the foregoing methods, a need exists for calculating a better wavelet model, which will result in improved images of subsurface geological structures and/or better estimations of the characteristics of the earth.

## SUMMARY

According to an embodiment, there is a method for calculating a characteristic of the earth based on recorded seismic data related to a subsurface. The method includes receiving well log data; calculating a statistical model based on the well log data; calculating a reflectivity R of the subsurface based on an intercept A and a gradient B of the statistical model; calculating a reconstructed gather D based on the reflectivity R and a wavelet model W; calculating parameters $W_n$ of the wavelet model W with a first inversion function C that depends on (i) the reconstructed gather D, (ii) a recorded gather $D_0$, and (iii) a probability density function (pdf) associated with the statistical model; and calculating the characteristic of the earth for the subsurface, based on the parameters $W_n$ of the wavelet model W and the recorded gather $D_0$.

According to another embodiment, there is a computing device for calculating a characteristic of the earth based on recorded seismic data related to a subsurface. The computing device includes an input/output interface for receiving well log data; and a processor connected to the input/output interface. The processor is configured to calculate a statistical model based on the well log data; calculate a reflectivity R of the subsurface based on an intercept A and a gradient B of the statistical model; calculate a reconstructed gather D based on the reflectivity R and a wavelet model W; calculate parameters $W_n$ of the wavelet model W with a first inversion function C that depends on (i) the reconstructed gather D, (ii) a recorded gather $D_0$, and (iii) a probability density function (pdf) associated with the statistical model; and calculate the characteristic of the earth for the subsurface, based on the parameters $W_n$ of the wavelet model W and the recorded gather $D_0$.

According to yet another embodiment, there is a non-transitory computer readable medium, including computer executable instructions, wherein the instructions, when executed by a processor, implement a method for calculating a characteristic of the earth based on recorded seismic data related to a subsurface as noted above.

As described herein, the above apparatus and methods may be used to generate improved images of geological structures.

## BRIEF DESCRIPTION OF THE DRAWINGS

The accompanying drawings, which are incorporated in and constitute a part of the specification, illustrate one or more embodiments and, together with the description, explain these embodiments. In the drawings:

Figure 1 is a schematic diagram of a marine seismic data acquisition system;
Figure 2 is a schematic diagram of a land seismic data acquisition system;
Figure 3 illustrates a seismic wave's path from a source to a receiver underground;
Figure 4 illustrates a migrated angle gather;
Figure 5 illustrates a well reflectivity;
Figure 6 is a flowchart of a method for calculating a characteristic of the earth using a wavelet model;
Figure 7 illustrates the intercept and gradient values for a given well;
Figure 8 illustrates a coloring wavelet;
Figure 9 illustrates the coloring wavelet's spectrum;
Figure 10 illustrates a probability density function for a statistical model of the well;
Figure 11 is a flowchart of a method for calculating a wavelet model;
Figure 12 illustrates a reconstruction error of an image gather calculated based on the wavelet model;
Figure 13 illustrates an estimated reflectivity calculated based on the reconstructed image gather;
Figure 14 illustrates wavelets calculated using a blind separation method;
Figure 15 illustrates wavelets calculated using a non-blind separation method;
Figure 16 is a flowchart of a method for calculating a characteristic of the earth based on the wavelet model; and
Figure 17 is a schematic diagram of a computing device configured to implement the methods discussed above.

## DETAILED DESCRIPTION

The following description of the embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to common image gathers (CIG). However, the embodiments to be discussed next are not limited to CIG, but may be also applied to other type of gathers.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures, or characteristics may be combined in any suitable manner in one or more embodiments.

As previously discussed, the seismic elastic inversion is a process that takes as input a pre-stack processed seismic dataset. A pre-stack seismic dataset is a set for which the traces were not previously stacked. This dataset may take the form of CIG gathers computed on a dense set of surface locations (x,y) by a process called migration. Although in the following embodiments only CIG gathers are used to exemplify the novel method, other type of gathers may be used, as the common midpoint gathers, or the common shot gathers, or the common receiver gathers, etc. The CIG gather is a subset of the entire data seismic set collected during the acquisition phase. The traces present in the CIG gather are selected to take into account the dipping reflector geometry of the subsurface.

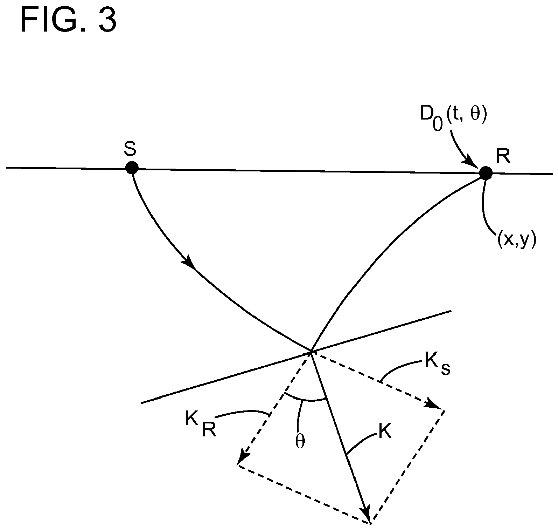

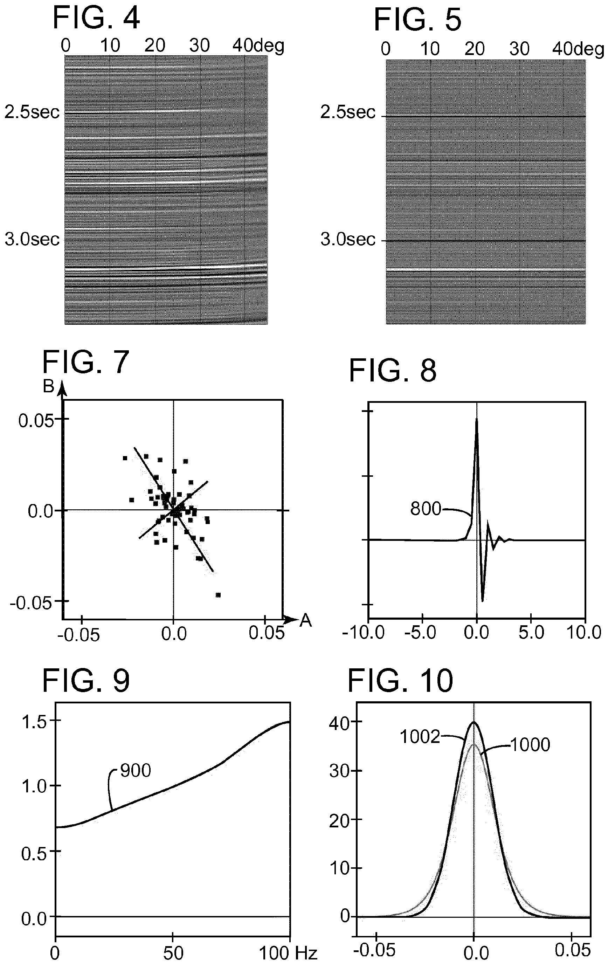

For a given surface location (x,y), as illustrated in Figure 3, the measured CIG is denoted $D_0(t,\theta)$, where $t$ is the migrated time and $\theta$ the local reflection angle. Figure 3 shows a wavenumber vector $\mathbf{k}_s$ for the wavefields from the source S, a wavenumber vector $\mathbf{k}_r$ for the wavefields from the receiver R, and a migration vector $\mathbf{k}$. Gather $D_0$ is shown in Figure 4. The migrated time $t$ can be replaced by the migrated depth z and/or the angle $\theta$ may be replaced by the offset $h$ (i.e., a distance between the source S and the receiver R in the plane that includes the source S and receiver R) without changing the nature of the described method.

During the migration process, a velocity model is used. The velocity model is correct if the gathers exhibit only horizontal events. When this is not the case, the gathers are not totally horizontal, as shown in Figure 4 (note the up curving of the black and white lines at large amplitudes).

The seismic elastic inversion process takes CIGs as input and outputs, for every surface location (x,y), quantities related to the local elastic properties of the earth, as for example, the P-impedance $I_P(t)$, the S-impedance $I_S(t)$ and, optionally, the density $\rho(t)$.

However, in order to do so, the seismic elastic inversion also needs a pre-stack wavelet model $W(t,\theta)$. More precisely, the seismic elastic inversion considers that each gather at a given surface location can be modeled as described by the following equation:

$$D_0(t,\theta) = W(t,\theta) * R(t,\theta) + N(t,\theta) \qquad (1)$$

where $D_0(t, \theta)$ is the input pre-stack gather, $W(t, \theta)$ is the wavelet model, $R(t, \theta)$ is the reflectivity, and $N(t, \theta)$ is the noise.

The symbol "*" denotes convolution in time. The inputs to the seismic elastic inversion are the gather and the wavelet model. The output of the elastic inversion are the elastic parameters such as P-impedance $I_P(t)$, the S-impedance $I_S(t)$ and the density $\rho(t)$.

The seismic elastic inversion process estimates/calculates, according to this embodiment, from the elastic parameters $\rho(t)$, $V_P(t)$, and $V_S(t)$ (or alternatively, uses the Zoeppritz equation), an intercept $A(t)$, a gradient $B(t)$ and optionally a curvature $C(t)$ based on equation (2) below, and then the process estimates a reflectivity $R(t,\theta)$ by using the two-term or three term Aki-Richards equation (3) (or other equivalent methods) as follows:

$$A = \frac{1}{2}\left(\frac{\Delta V_P}{V_P} + \frac{\Delta \rho}{\rho}\right), B = \frac{\Delta V_P}{2V_P} - 4\left(\frac{V_S}{V_P}\right)^2 \frac{\Delta V_S}{V_S} - 2\left(\frac{V_S}{V_P}\right)^2 \frac{\Delta \rho}{\rho}, C = \frac{\Delta V_P}{2V_P}, \quad (2)$$

$$R(t,\theta) = A(t) + B(t)\sin^2\theta + C(t)\sin^2\theta\tan^2\theta. \quad (3)$$

A well reflectivity calculated based on equations (2) and (3) is shown in Figure 5. Then, the modeled gather $D(t,\theta)=W(t,\theta)*R(t,\theta)$ is computed by using the input wavelet model $W(t,\theta)$ and the seismic inversion process minimizes the misfit between the modeled gather $D(t,\theta)$ and the measured gather $D_0(t,\theta)$. However, the results of this process can be improved as discussed below.

According to an embodiment, the pre-stack wavelet model $W(t, \theta)$ is estimated with a continuous variation in time and angle, with an amplitude and a phase term that uses the available wells information only in a statistical sense. In other words, the novel pre-stack wavelet model is based on (1) estimating a statistical model for the intercept A and gradient $B$ (and optionally the curvature C discussed with regard to equation (2)) from the well logs, and (2) using this statistical model in an inversion (e.g., Bayesian inversion) in which the cost function has (i) a first term representing the conformity of the estimated intercept and gradient (and optionally the curvature) with the statistical model and (ii) a second term representing the conformity of the gather computed from the estimated wavelet model, with the recorded pre-stack seismic gathers.

A statistical model for intercept A and gradient $B$ has three statistical features. First, there is an anti-correlation between A and $B$ which is equivalent to stating that "usually" B and A are of opposite sign, so that the amplitude decreases with angle, while keeping the possibility of an "unusual" case where A and $B$ have the same sign and the amplitude increases versus angle. Second, the reflectivities do not have a white spectrum, but rather a blue spectrum. Third, the reflectivities do not have a Gaussian distribution, but rather a "long-tail" distribution. Well data, when available, can be used to extract these statistical properties in a quantitative way.

In one application, the wavelet model uses a structure which is autoregressive moving-average (ARMA) parametrized in lattice parameters.

In the following, the pre-stack wavelet model is discussed based only on the intercept A term and the gradient $B$ term of the Aki-Richards equation (i.e., the two terms Shuey equation). Those skilled in the art would understand that the same concepts apply to the full three-term equation, by incorporating the curvature C term.

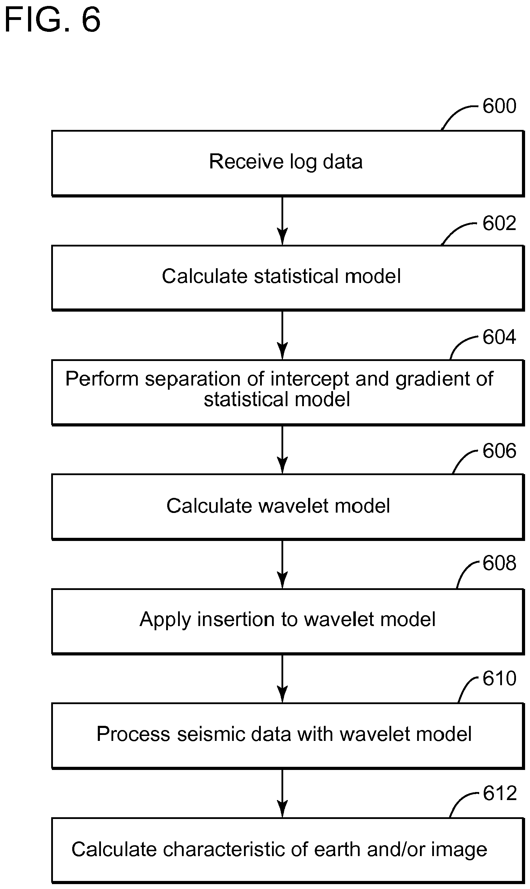

The method for constructing the pre-stack wavelet model is now discussed with regard to Figure 6. In step 600, data from one or more well logs is received. This data may include, but is not limited to, density p(t), P-wave velocity $V_P(t)$, and S-wave velocity $V_S(t)$. This data is received either directly from real measurements made at one or more wells or from processed well logs. In case that no well is available in the area of interest, a generic statistical model may be used to simulate these measurements. For example, the generic statistical model may use a zero-phase wavelet that can be statistically estimated for a given time window and a given partial angle stack (stacking of traces based on a common angle) by assuming a white reflectivity. Thus, in the following, well log recorded data is understood to mean either physically recorded data or a generic statistical model.

In step 602, a statistical model for the intercept A(t) and gradient B(t) is calculated. The statistical model is based on equation (2), where the third term is ignored, i.e.,

$$A = \frac{1}{2}\left(\frac{\Delta V_P}{V_P} + \frac{\Delta \rho}{\rho}\right), B = \frac{\Delta V_P}{2V_P} - 4\left(\frac{V_S}{V_P}\right)^2 \frac{\Delta V_S}{V_S} - 2\left(\frac{V_S}{V_P}\right)^2 \frac{\Delta \rho}{\rho}. \quad (4)$$

It is noted that each quantity in equation (4) depends on time, but for simplicity, this has been omitted. This means that as the log well data is measured over time, the density and various velocities change in time. These changes in time are reflected in the intercept A and gradient B values. When the values of the intercept A and gradient B are calculated based on equation (4) and then plotted on a graph, as in Figure 7 (the intercept is plotted on the X axis and the gradient is plotted on the Y axis), a cross-plot of A(t) and B(t) is obtained for a given well. Figure 7 shows that the dominant diagonal corresponds to the anticorrelation of these two quantities. The information shown in Figure 7 illustrates the statistical model.

Next, in step 604, a blind source separation of the intercept A(t) and gradient B(t) of the statistical model is calculated. Prior to actually applying the blind source separation to the intercept and gradient of the statistical model, a few general considerations about source separation are now presented. Note that source separation problems in digital signal processing are those in which several signals have been mixed together into a combined signal and the objective is to recover the original component signals from the combined signal. Source separation is a process that estimates N signals $s_i(t)$ from N input independent components $e_j(t)$ and a correlation matrix $c_{ij}$, such that these quantities respect the following equation:

$$s_i(t) = \sum_{j=1}^{N} c_{ij} e_j(t), \text{with } i = 1, \dots, N. \quad (5)$$

In blind source separation, the input independent components $e_j(t)$ are unknown, but they are supposed to be independent with a known probability density function (pdf) p(x). If the pdf is Gaussian, then only a matrix $V = C^T C$ can be recovered, where matrix C has components $c_{ij}$. However, if the pdf is non-Gaussian, then the matrix C can be estimated, and the independent components $e_j(t)$ may be computed by applying the inverse matrix $C^{-1}$ to the signals $s_i(t)$. Matrix C is selected such that after applying the matrix $C^{-1}$ to the signals $s_i(t)$, the components $e_j(t)$ respect the following relation:

$$\frac{1}{N_t} \sum_t e_i(t) f'[e_j(t)] = \delta_{ij}, \quad (6)$$

where $N_t$ is the number of $t$ values, function f is defined as $f(x) = -\log p(x)$, the prime sign next to function $f$ indicates a space derivative, and $\delta_{ij} = 1$ if $_i = j$, and 0 otherwise.

Once the independent components $e_j(t)$ are calculated, they can be whitened by computing coloring wavelets. Figure 8 shows a coloring wavelet 800 obtained by using a non-gaussian blind deconvolution algorithm, and Figure 9 shows the amplitude spectrum 900 of the coloring wavelet. It can be seen that the amplitude spectrum of the wavelet increases with frequency (blue spectrum). Combining these two steps results in a convolutional source separation as expressed by the following equation:

$$s_i(t) = \sum_{j=1}^{N} c_{ij} * e_j(t), \text{with } i = 1, \dots, N, \quad (7)$$

where $c_{ij}$ are the wavelets which are convolved with the independent whitened components $e_j(t)$.

Returning to step 604, the blind source separation process discussed above is applied to the statistical model that includes the intercept A and the gradient B. In this case, $N = 2$, $s_1(t) = A(t)$, $s_2(t) = B(t)$ and the statistical model includes the wavelets $c_{ij}(t)$ obtained by applying equation (7), i.e., the convolutional source separation. The statistical model also includes the probability density function $p(x)$ of the independent whitened components $e_j(t)$. Different pdfs can be used and the function $p(x)$ can be adapted to the statistics of each well, once the independent whitened components $e_j(t)$ have been computed. A pdf corresponding to a logistic distribution is given by:

$$p(x) = \frac{1}{\left(2\cosh\frac{x}{2}\right)^2}. \quad (8)$$

The function of equation (8) is a good candidate for the pdf when the number of samples of the well is not sufficient to estimate precisely the exact pdf of the components. This pdf is illustrated in Figure 10 by curve 1000. Curve 1002 is a Gaussian distribution. It can be seen that the logistic distribution 1000 has a longer tail than the Gaussian distribution 1002, which corresponds to the observation that reflectivities are sparser than Gaussian distributions (they have more events that are much larger than the background).

Extracting the statistical model from the well logs has allowed to precisely quantify three known features of the intercept $A(t)$ and gradient $B(t)$ components: their anticorrelation, their blue spectrum and their sparseness.

Returning to the method of Figure 6, after performing the separation of the statistical model in step 604, the method advances to step 606 for calculating the wavelet model $W(t,\theta)$. The structure of the wavelet model is best explained in the z-transform notation. The wavelet $W(f)$ in the spectral domain is transformed to the z-transform $W(z)$ by using $z = \exp(2j\pi f\Delta t)$, where $\Delta t$ is the time sampling interval, $j$ is the complex number given by square root of minus one, and $f$ is the frequency. The model used for the wavelet model $W(z)$ is a product of (1) a scale term $\sigma$, (2) a normalized phase-only term $W_P(z)$ and (3) a normalized zero-phase term $W_A(z)$. Thus, the wavelet model can be written as:

$$W(z) = \sigma W_P(z) W_A(z). \qquad (9)$$

To construct the phase-only term $W_P(z)$, it is possible to use an all-pass autoregressive moving average (ARMA) structure as described by the following equations:

$$S(z) = \frac{z^P G(z^{-1})}{G(z)}, with\ G(z) = \sum_{n=0}^{P} g_n z^n\ and\ g_0 = 1, \qquad (10)$$

where $G(z)$ is a normalized minimum phase filter of length P.

The normalized phase-only term $W_P(z)$ is then defined as the product of a casual all-pass wavelet and an anticausal all-pass wavelet as described by equation:

$$W_P(z) = \frac{z^P G(z^{-1})}{G(z)} \frac{z^{-Q} H(z)}{H(z^{-1})}, with\ G(z)$$

$$= \sum_{n=0}^{P} g_n z^n, H(z) = \sum_{n=0}^{Q} h_n z^n, g_0 = 1\ and\ h_0 = 1, \qquad (11)$$

where $H(z)$ is a normalized minimum phase filters of length Q.

The zero-phase term $W_A(z)$ is an ARMA structure with a zero-phase numerator and a zero-phase denominator as described by the following equation:

$$W_A(z) = \frac{U(z) U(z^{-1})}{V(z) V(z^{-1})}, with\ U(z)$$

$$= \sum_{n=0}^{R} u_n z^n, V(z) = \sum_{n=0}^{S} v_n z^n, u_0 = 1\ and\ v_0 = 1, \qquad (12)$$

where $U(z)$ and $V(z)$ are normalized minimum phase filters of lengths R and S, respectively.

The four normalized minimum phase filters $G(z)$, $H(z)$, $U(z)$ and $V(z)$ can be parametrized by their lattice parameters $k_n$. With this lattice structure, the filters are minimum phase if all their lattice parameters are between -1 and 1. In order to make the wavelet model smooth in terms of time and angle variations while having a value between -1 and 1, the lattice parameters $k_n$ are selected as follows:

$$k_n(t,\theta) = \sin\left[\sum_{pq} w_{npq}T_p(t)T_q(\theta)\right], \quad (13)$$

where $T_p(t)$ and $T_q(\theta)$ can be taken as orthogonal polynomials.

The scale term $\sigma$ of the wavelet $W(z)$ can be taken as follows:

$$\sigma(t,\theta) = \exp\left[-\sum_{pq} w_{pq}T_p(t)T_q(\theta)\right]. \quad (14)$$

The coefficients $w_{npq}$ for the filters G, $H$, $U$, and V and the coefficients $w_{pg}$ for the scaling $\sigma$ are denoted $w_n$ and they describe the wavelet model $W(t,\theta)$.

The method now advances to step 608 for applying an inversion to the wavelet model $W(t,\theta)$. This inversion is different than the seismic elastic inversion previously discussed. The inversion may include an a priori term that describes the conformity of the estimated intercept and gradient with the statistical model and a posteriori term that describes the conformity of the gather computed from the estimated wavelet model with the measured pre-stack seismic data. Thus, the a priori term describes parameters of the earth acquired independent of the seismic data from which the gathers are determined, and the a posteriori term describes the acquired seismic data. In other words, the a priori term relates to events before the seismic data acquisition takes place and the a posteriori term relates to events of the seismic survey.

In the embodiment discussed now, a Bayesian inversion having the a priori term and the a posteriori term is applied to the wavelet model. Again, this inversion is not to be mixed up with an inversion that is applied later to the CIG gathers for determining various characteristics of the earth or an image of the surveyed subsurface.

The unknowns for the Bayesian inversion are the independent whitened components $e_1(t)$ and $e_2(t)$ as well as the wavelet parameters $w_n$. The independent whitened components cannot be computed from the well logs because it is assumed that the desired calculations are performed at a location $(x,y)$ where no well is available. However, it is still possible to consider that the statistical model computed from a nearby well is still valid.

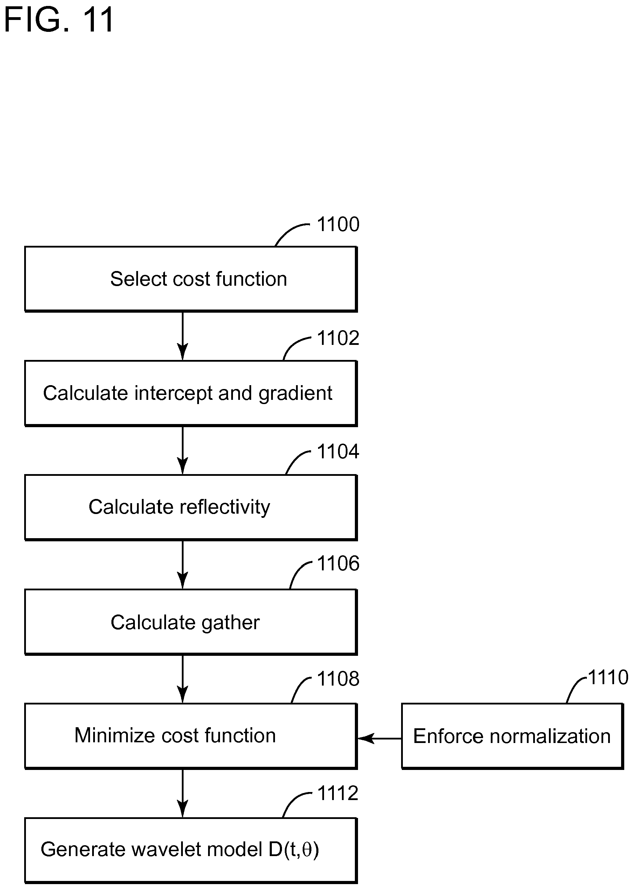

The Bayesian inversion process, which is illustrated in Figure 11, selects in step 1100 a cost function $C(e_1,e_2,w_n)$ (Bayesian cost function) that needs to be minimized or maximized for determining the unknown quantities $e_1$, $e_2$, and $w_n$. Before doing this, the method computes, in step 1102, based on the independent components $e_1$ and $e_2$, the intercept and gradient of the statistical model of the well, which are given by the following equations:

$$A(t) = c_{11}(t) * e_1(t) + c_{12}(t) * e_2(t)$$
$$B(t) = c_{21}(t) * e_1(t) + c_{22}(t) * e_2(t). \quad (15)$$

Then, in step 1104, the method calculates the angle dependent reflectivity using Shuey equation:

$$R(t,\theta) = A(t) + B(t)\sin^2\theta. \quad (16)$$

In step 1106, a reconstructed gather is calculated by applying the time and angle variant lattice filter $W$ to the reflectivity R as illustrated in the following equation:

$$D(t,\theta) = W(t,\theta) * R(t,\theta). \quad (17)$$

The Bayesian cost function C selected in step 1100 has one a priori term $C_P$, which is the negative logarithm of the a priori probability density function $p(x)$ of the independent components $e_1$ and $e_2$. This term can be written, after normalization, as follows:

$$C_P = -\frac{1}{2N_t} \sum_t \left[ logp[e_1(t)] + logp[e_2(t)] \right], \quad (18)$$

where Nt is the number of t values.

The Bayesian cost function C also has an a posteriori term $C_D$ that depends on the measured seismic data $D_0(t, \theta)$, which is the negative logarithm of the probability density function of the noise $N(t, \theta)$. The a posteriori term can be written, if the noise is white and after normalization, as follows:

$$C_D = \frac{1}{N_t N_\theta} \sum_{t,\theta} [D(t,\theta) - D_0(t,\theta)]^2, \quad (19)$$

where $D_0(t, \theta)$ is the angle gather obtained from processing the recorded seismic data and $D(t, \theta)$ is the gather reconstructed in step 1106 from (1) components $e_1$ and $e_2$ and (2) the wavelet model $W(t, \theta)$ reconstructed from the wavelet parameters $w_n$ based on equations (11) to (14).

Thus, the Bayesian cost function C can be written as:

$$C[e_1(t), e_2(t), w_n] = \lambda C_P + C_D$$
$$= \lambda \frac{1}{2N_t} \sum_t \left[ f[e_1(t)] + f[e_2(t)] \right] + \frac{1}{N_t N_\theta} \sum_{t,\theta} [D(t,\theta) - D_0(t,\theta)]^2, \quad (20)$$

where $\lambda$ is the hyperparameter governing the compromise between the two terms of the cost function and may account for the minus sign in equation (18).

Having the cost function, the method minimizes or maximizes it in step 1108, by using known processes, for example, the conjugate gradient method. However, there is a scale ambiguity associated with this cost function. If all scale terms $\sigma(t,\theta)$ are divided by a factor $\sigma_0$ and the independent components $e_1(t)$ and $e_2(t)$ are multiplied by $\sigma_0$, then the angle gather $D(t,\theta)$ does not change, which means that the a posteriori term $C_D$ of the cost function also does not change. Contrary to this, the a priori term $C_P$ decreases. Thus, the cost function needs to be modified to prevent the scale term $\sigma(t,\theta)$ from going to infinity.

One approach, which is applied in step 1110, is to enforce a normalization of the scale term $\sigma(t,\theta)$ during the minimization of the cost function C. For example, the geometrical mean of the scale term $\sigma(t,\theta)$ can be forced to unity (or a constant value) as follows:

$$\frac{1}{N_t N_\theta} \sum_{t,\theta} log \, \sigma^N(t,\theta) = 0 \quad (21)$$

and then compute, after the minimization, a scaling quantity $\sigma_0$ of the normalized values $\sigma^N(t, \theta)$, $e_1^N(t)$ and $e_2^N(t)$ to obtain the final values $\sigma(t,\theta)$, $e_1(t)$ and $e_2(t)$ by using the following equation:

$$\sigma(t,\theta) = \frac{\sigma^N(t,\theta)}{\sigma_0}, e_1(t) = \sigma_0 e_1^N(t), and \; e_2(t) = \sigma_0 e_2^N(t). \quad (22)$$

The scaling quantity $\sigma_0$ can be computed by using equation (6) for $i=j$:

$$\frac{1}{N_t} \sum_t \left[ \sigma_0 e_1^N(t) f'[\sigma_0 e_1^N(t)] + \sigma_0 e_2^N(t) f'[\sigma_0 e_2^N(t)] \right] = 1, \quad (23)$$

which is equivalent to

$$\frac{1}{2N_t}\sum_t \left[ e_1^N(t)f'[\sigma_0 e_1^N(t)] + e_2^N(t)f'[\sigma_0 e_2^N(t)] \right] - \frac{1}{\sigma_0} = 0, \quad (24)$$

which is equivalent to minimizing in $\sigma_0$ the function:

$$c(\sigma_0) = \frac{1}{2N_t}\sum_t \left[ f[\sigma_0 e_1^N(t)] + f[\sigma_0 e_2^N(t)] \right] - \log(\sigma_0) = 0. \quad (25)$$

By replacing the independent components with their normalized values, i.e.,

$$e_1(t) = \sigma_0 e_1^N(t) \; and \; e_2(t) = \sigma_0 e_2^N(t) \quad (26)$$

and

$$\frac{1}{N_t N_\theta}\sum_{t,\theta} log\sigma(t,\theta) = \frac{1}{N_t N_\theta}\sum_{t,\theta} log\sigma^N(t,\theta) - log\sigma_0 = -log\sigma_0, \quad (27)$$

it is possible to solve the scaling ambiguity of the cost function during the minimization by adding a Jacobian term $C_J$ to the a priori term $C_P$ as follows:

$$C_P + C_J = \frac{1}{2N_t}\sum_t \left[ f[e_1(t)] + f[e_2(t)] \right] + \frac{1}{N_t N_\theta}\sum_{t,\theta} log\sigma(t,\theta). \quad (28)$$

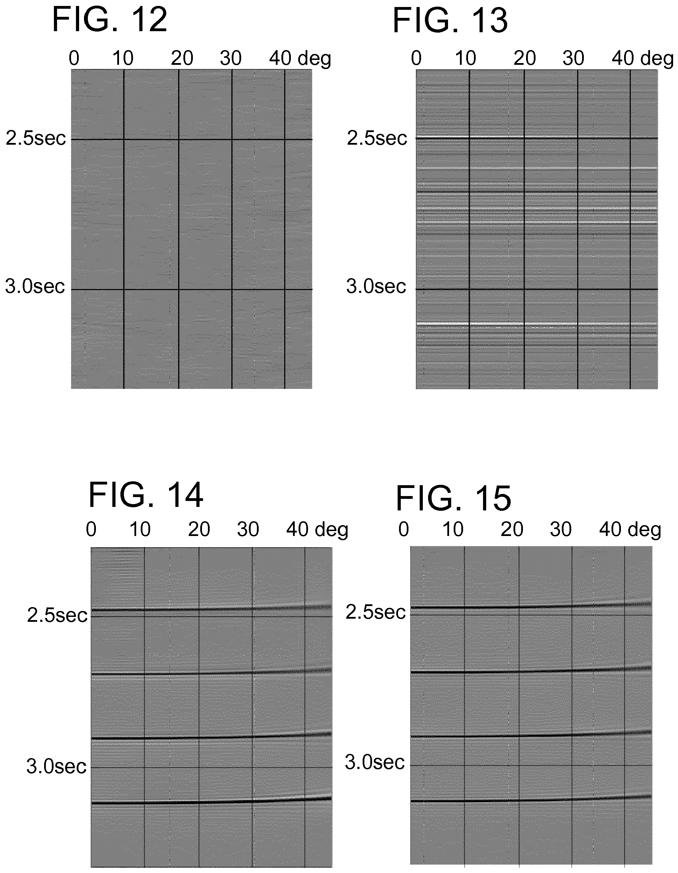

Thus, as a result of minimizing the cost function in step 1108 with the normalization noted in equation (28), which is applied in step 1110, the method generates in step 1112 the wavelet model, which is continuous in time and angle. Figure 12 shows the reconstruction error $D(t,\theta) - D_0(t,\theta)$ for the CIG $D_0(t,\theta)$ shown in Figure 4 and Figure 13 shows the estimated well reflectivity, which can be compared to the actual well reflectivity shown in Figure 5. Figure 14 shows the estimated blind wavelet $D(t,\theta)$ (for the middle of the time window shown in the figure) and Figure 15 shows the deterministic wavelet $D(t,\theta)$ computed in non-blind mode (using the actual reflectivity of Figure 5). One skilled in the art would note that the blind wavelets are very close to the non-blind wavelets.

If the noise $N(t,\theta)$ of the angle gathers is non-white, it is possible to use a noise-whitening operator $A_N(t)$ for modifying the data dependent (a posteriori) term $C_D$, as follows:

$$C_D = \frac{1}{N_t N_\theta}\sum_{t,\theta} \left[ A_N(t) * \left( D(t,\theta) - D_0(t,\theta) \right) \right]^2, \quad (29)$$

The noise-whitening operator $A_N(t)$ has a power spectral density of the noise $NN(f)$ given by:

$$NN(f) = \frac{\sigma_N^2}{|A_n(f)|^2}. \quad (30)$$

Such a whitening operator can be computed during the iterative minimization step 1108 illustrated in Figure 11, using, for example, a Levinson algorithm applied to the reconstruction error $D(t,\theta) - D_0(t,\theta)$ illustrated in Figure 12. If this is the case, then the Bayesian cost function C, after adding the Jacobian term discussed with regard to equation (28) and the noise-whitening operator discussed with regard to equation (29) is given by:

$$C[e_1(t), e_2(t), w_n]$$

$$= \lambda \frac{1}{2N_t} \sum_t \left[f[e_1(t)] + f[e_2(t)]\right]$$

$$+ \lambda \frac{1}{N_t N_\theta} \sum_{t,\theta} log\sigma(t,\theta) + \frac{1}{N_t N_\theta} \sum_{t,\theta} \left[A_N(t) * \left(D(t,\theta) - D_0(t,\theta)\right)\right]^2. \quad (31)$$

The whitening operator $A_N(t)$ have been shown in equation (29) to depend only on time $t$, however, it is possible to also depend on angle $\theta$.

Returning to the method discussed with regard to Figure 6, after the wavelet model has been calculated in step 608, as discussed with regard to the method of Figure 11, the process advances to step 610 for processing the recorded data, for example, by applying the wavelet model to the CIG gather for obtaining processed seismic data. The processed seismic data may then be used in step 612 for calculating one or more characteristics of the earth (e.g., density, speed, etc.) and/or an image of the subsurface that was seismically surveyed.

The methods discussed above have used only the intercept and gradient (two term Shuey equation) for the statistical model. However, the methods may be extended to the three-term Aki-Richards equation (see equation 2), thus using the intercept $A(t)$, the gradient $B(t)$, and the curvature $C(t)$. This means that the source separation is performed on three components, resulting in a statistical model with a three-by-three matrix. Then, the Bayesian inversion discussed in Figure 11 would use a statistical model with 3 independent whitened components $e_1(t)$, $e_2(t)$ and $e_3(t)$.

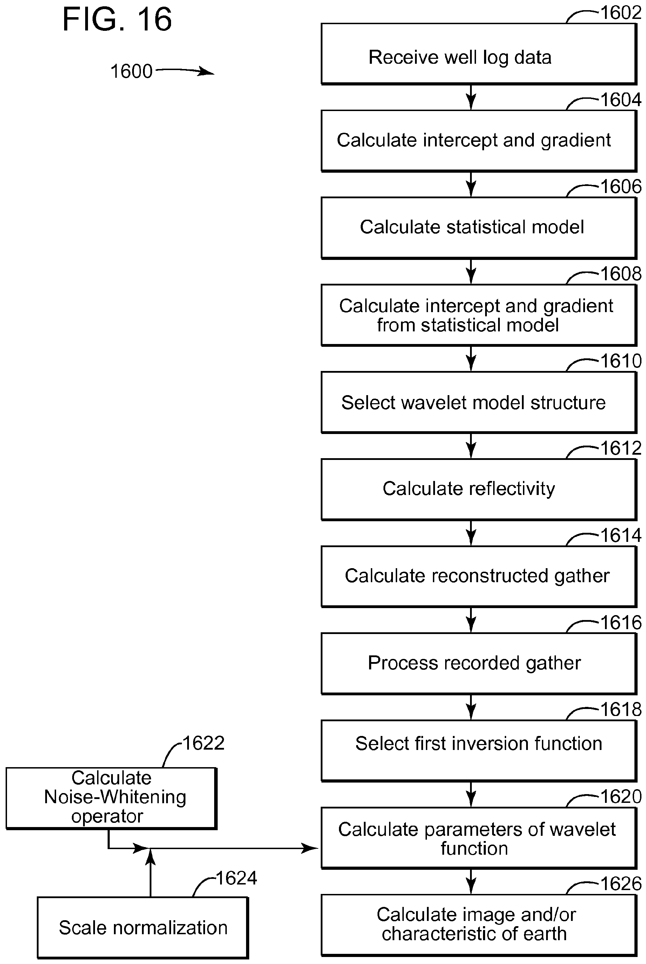

A method for calculating a characteristic of the earth with an improved wavelet model is now discussed with regard to Figure 16. It is noted that this method not only improves the technological field of imaging the subsurface of the earth for better exploring the oil and gas reserves, but also improves the functionality of a computer that runs such methods by using a wavelet model that is continuous in time and angle. Because the previous methods use wavelet models that are not continuous in time and angle, the mathematical difficulties to be handled by such models require human intervention due to the model discontinuities.

Further, for conventional narrowband acquired seismic data, the wavelet is weakly varying, as a Ricker-type wavelet with a dominant frequency decreasing with time and angle. For broadband data, which may be used in the methods discussed above, the wavelet becomes strongly dependent on time and angle. This is because the method attempts to push the maximum frequency $f_{max}(t,\theta)$ of the wavelet as far as possible: this means $f_{max}$ decrease quite fast with time and angle, due to both the stretch effect and the absorption. Note that for broadband data, the wavelets exhibit more variations, due to the fact that the maximum frequency is very high for small time and angle values, but much smaller for large time and angle values.

Figure 16 shows a method 1600 that receives well log data in step 1602. The method calculates in step 1604 the intercept and gradient based on equation (4). Note that the intercept and gradient depend on time and for this reason, these two parameters take many values during a given time interval, as illustrated in Figure 7. Based on these multiple values, in step 1606, the method computes, for example, by convolutional source separation as described by equation (7), the statistical model of the intercept and gradient in terms of sparseness, coloring wavelet (see Figures 8 and 9), and correlation matrix $c_{ij}$. The statistical model includes the correlation matrix and a probability density function $p(x)$. In one application, the method used the pdf introduced in equation (8), e.g., the logistic distribution (shown in Figure 10), which is not a Gaussian distribution. The statistical model includes the anticorrelation of the intercept and gradient components, their blue spectrum (illustrated in Figure 9) and their sparseness.

In step 1608, the intercept and gradient are calculated from the statistical model. Note that by calculating the intercept and gradient from the statistical model, which is different from step 1604 in which the intercept and gradient were calculated from an equation, the method makes use of the well in a statistical sense, which means that the well does not have to be at the exact location of the seismic gather. The statistics of a well can be considered to be valid regionally, and not only locally. If no well is available, a generic statistical model can be used and steps 1602 and 1604 may be omitted.

The method then advances to step 1610 where a wavelet model structure is selected, for example, a parametrically time and angle ARMA model, and the parameters of the ARMA model are the lattice parameters (see, e.g., equation (13)). In step 1612, the time and angle dependent reflectivity is calculated based on equation (16) or (3), using the intercept and gradient calculated from the statistical model in step 1608. Then, in step 1614, the reconstructed gather $D(t,\theta)$ is calculated based on the wavelet model from step 1610 and the reflectivity from step 1612. In step 1616, seismic data acquired during a seismic survey is received and processed to obtain recorded gather $D_0(t,\theta)$. As previously

discussed, the gathers noted in this method are common image gathers. However, other type of gathers can be used.

The method advances to step 1618 in which a first cost function is selected for calculating the parameters $w_n$ of the wavelet function. In one example, the first cost function is a Bayesian cost function, that has (i) a first term (a priori) that is related to the probability density function of the statistical model (see equation (18) and (ii) a second term (a posteriori) that is related to a difference between the recorded gather $D_0(t, \theta)$ and the reconstructed gather $D(t, \theta)$. In step 1620, the parameters $w_n$ of the wavelet model are calculated by Bayesian inversion. The Bayesian inversion may be solved with a conjugate gradient method. Optionally, in step 1622, a noise-whitening operator is calculated during the iterative process of Bayesian inversion. The noise-whitening operator may be calculated with a Levinson algorithm. In step 1624, the scale term of the cost function is normalized, as discussed above with regard to Figure 11, i.e., a Jacobian term is added to the cost function, for preventing a scale ambiguity (see equation (28)).

As a result of step 1620, the parameters $w_n$ of the wavelet model $W(t, \theta)$ are calculated and thus, the reconstructed gather $D(t, \theta)$ is known. A second cost function (associated with an elastic inversion of the acquired seismic data) may then be applied in step 1626 to the reconstructed gather for generating the processed data. This processed data may then be used to generate an image of the subsurface. Alternatively, the wavelet model may be used in step 1626 for processing the acquired seismic data for generating one or more characteristics of the earth. For example, the phase only part of the wavelet W may be applied to the acquired seismic data to obtain the processed seismic data and then one or more characteristics of the earth are calculated based on the processed seismic data (using, for example, an inversion process).

The method discussed above can be used in a variety of other ways. For example, in one application, the independent whitened components $e_1(t)$ and $e_2(t)$ of the statistical model can be used to compute the intercept and gradient $A(t)$ and $B(t)$, which can be used to invert for the elastic parameters. Alternatively, the wavelet model $W(t,\theta)$ can be forwarded to any elastic inversion together with the gathers $D_0(t,\theta)$.

In addition, the wavelet model can be forwarded together with the modeled gathers $D(t,\theta)$ for generating the image of the subsurface, which is equivalent to performing a noise attenuation or data conditioning. Another alternative is to apply the phase part of the wavelet model to either $D_0(t,\theta)$ or $D(t,\theta)$, which is equivalent to performing a residual moveout (that is a flattening of the gathers), and provide these processed gathers to the seismic inversion with the zero-phase part of the wavelet model. The wavelet model can be estimated in a multichannel way, where multiples CIGs corresponding to surface positions $(x,y)$ covering a given surface contribute to the estimation of a single common wavelet model.

The embodiments discussed above make uses of the well in a statistical sense, which means the well does not have to be at the exact location of the seismic gather. This means that the statistics of a well can be considered to be valid regionally, and not only locally. If no well is available, a generic statistical model can be used.

An advantage of one or more of the embodiments discussed above is the continuous variation in time and angle of the gather, which allows to have a more precise wavelet model. The continuous variation in time allows the use of large windows, and therefore a better estimation of the low frequencies, while taking into account the time variability of the wavelet. As the method separates the signal from the noise, no partial angle stacking is necessary and the angle dependency can also be precisely modeled.

In one embodiment, the wavelet model can estimate the scaling, the normalized amplitude spectrum and the normalized phase spectrum, while existing statistical methods estimate only a normalized amplitude spectrum.

The seismic data that may be processed with one or more of the above embodiments may include both hydrophone (i.e., pressure) data (H) and particle motion data (V). The particle motion data (V) may be used to directly or indirectly determine a vertical velocity (Vz) for particles proximate to the detectors that provided the particle motion data. The additional particle velocity data may be kinematically the same as hydrophone data (i.e., arrivals at the same times for the same traces), but with a polarity reversal on the migration-ghost event. It should be noted that some sensors, such as particle motion sensors, may be directional and contain only a component of the pressure recordings and such sensors may only be sensitive to acoustic energy travelling along the orientation of the sensor.

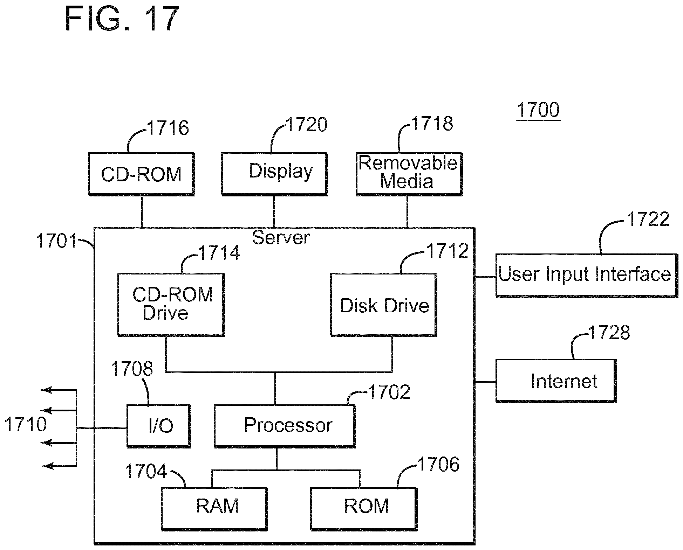

The above-discussed procedures and methods provide improved results over existing techniques and may be implemented in a computing device illustrated in Figure 17. Hardware, firmware, software, or a combination thereof may be used to perform the various steps and operations described herein. The computing device 1700 of Figure 17 is an exemplary computing structure that may be used in connection with such a system.

The exemplary computing device 1700 suitable for performing the activities described in the exemplary embodiments may include a server 1701. Such a server 1701 may include a central processor (CPU) 1702 coupled to a random access memory (RAM) 1704 and to a read only memory (ROM) 1706. The ROM 1706 may also be other types of storage media to store programs, such as programmable ROM (PROM), erasable PROM (EPROM), etc. The processor 1702 may communicate with other internal and external components through input/output (I/O) circuitry 1708 and bussing 1710, to provide control signals and the like. The processor 1702 carries out a variety of functions as are known in the art, as dictated by software and/or firmware instructions.

The server 1701 may also include one or more data storage devices, including hard drives 1712, CDROM drives 1714, and other hardware capable of reading and/or storing information such as DVD, etc. In one embodiment, software for carrying out the above-discussed steps may be stored and distributed on a CDROM or DVD 1716, a USB storage device 1718 or other form of media capable of portably storing information. These storage media may be inserted into, and read by, devices such as the CDDROM drive 1714, the disk drive 1712, etc. The server 1701 may be coupled to a display 1720, which may be any type of known display or presentation screen, such as LCD displays, plasma display, cathode ray tubes (CRT), etc. A user input interface 1722 is provided, including one or more user interface mechanisms such as a mouse, keyboard, microphone, touchpad, touch screen, voice-recognition system, etc.

The server 1701 may be coupled to other devices, such as sources, detectors, etc. The server may be part of a larger network configuration as in a global area network (GAN) such as the Internet 1728, which allows ultimate connection to the various landline and/or mobile computing devices.

The disclosed exemplary embodiments provide a computing device, a method for seismic data processing, and systems corresponding thereto. For example, the disclosed computing device and method could be integrated into a variety of seismic survey and processing systems including land, marine, ocean bottom, and transitional zone systems with either cabled or autonomous data acquisition nodes. It should be understood that this description is not intended to limit the invention. On the contrary, the exemplary embodiments are intended to cover alternatives, modifications, and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

**Claims**

1. A method (1600) for calculating a characteristic of the earth based on recorded seismic data related to a subsurface, the method comprising:

   receiving (1602) well log data;
   calculating (1606) a statistical model based on the well log data;
   calculating (1612) a reflectivity R of the subsurface based on an intercept A and a gradient B of the statistical model;
   calculating (1614) a reconstructed gather D based on the reflectivity R and a wavelet model W;
   calculating (1620) parameters $w_n$ of the wavelet model W with a first inversion function C that depends on (i) the reconstructed gather D, (ii) a recorded gather $D_0$, and (iii) a probability density function (pdf) associated with the statistical model; and
   calculating (1626) the characteristic of the earth for the subsurface, based on the parameters $w_n$ of the wavelet model W and the recorded gather $D_0$.

2. The method of Claim 1, wherein the characteristic of the earth is one of a density, P-impedance or S-impedance, the recorded gather $D_0$ is obtained from the recorded seismic data and the recorded seismic data is acquired with seismic sensors.

3. The method of Claim 1, wherein the step of calculating a reflectivity R comprises:

   calculating plural values of the intercept A and gradient B based on the well log data; and
   calculating an anticorrelation, a blue spectrum and sparseness of the plural values to obtain the statistical model.

4. The method of Claim 1, wherein the step of calculating a reconstructed gather D comprises:

   selecting a structure of the wavelet model that has a scale term $\sigma$, a phase-only term $W_P(z)$ and a zero-phase term $W_A(z)$.

5. The method of Claim 4, wherein the phase-only term $W_P(z)$ and the zero-phase term $W_A(z)$ are each an all-pass autoregressive moving average structure.

6. The method of Claim 1, wherein the first inversion function is a Bayesian function.

7. The method of Claim 1, wherein the first inversion function has (i) a first term $C_P$ that depends with a probability density function (pdf) of the statistical model and (ii) a second term $C_D$ that depends on a difference between the reconstructed gather D and the recorded gather $D_0$.

8. The method of Claim 7, wherein the first term $C_P$ is corrected with a Jacobian term $C_J$ to define a scaling of the first inversion function.

9. The method of Claim 7, wherein the second term $C_D$ is modified with a noise-whitening operator for a noise that is non-white.

10. The method of Claim 1, wherein the wavelet model W is continuous in a time and an angle that characterize the recorded gather.

11. The method of Claim 1, wherein the recorded gather is a common image gather.

12. The method of Claim 1, further comprising:

   using a second inversion function and the wavelet model W to process the seismic data to generate an image of the subsurface.

13. A computing device (1700) for calculating a characteristic of the earth based on recorded seismic data related to a subsurface, the computing device comprising:

   an input/output interface (1708) for receiving (1602) well log data; and
   a processor (1702) connected to the input/output interface and configured to,
   calculate (1606) a statistical model based on the well log data;
   calculate (1612) a reflectivity R of the subsurface based on an intercept A and a gradient B of the statistical model;
   calculate (1614) a reconstructed gather D based on the reflectivity R and a wavelet model W;
   calculate (1620) parameters $W_n$ of the wavelet model W with a first inversion function C that depends on (i) the reconstructed gather D, (ii) a recorded gather $D_0$, and (iii) a probability density function (pdf) associated with the statistical model; and
   calculate (1626) the characteristic of the earth for the subsurface, based on the parameters $W_n$ of the wavelet model W and the recorded gather $D_0$.

14. The computing device of Claim 13, wherein the characteristic of the earth is one of a density, P-impedance or S-impedance, the recorded gather $D_0$ is obtained from the recorded seismic data and the recorded seismic data is acquired with seismic sensors.

15. The computing device of Claim 13, wherein the processor is further configured to,
   calculate plural values of the intercept A and gradient B based on the well log data;
   calculate an anticorrelation, a blue spectrum and sparseness of the plural values to obtain the statistical model; and
   select a structure of the wavelet model that has a scale term $\sigma$, a phase-only term $W_P(z)$ and a zero-phase term $W_A(z)$.

# FIG. 1
## (BACKGROUND ART)

# FIG. 2
# (BACKGROUND ART)

# FIG. 3

# FIG. 4

# FIG. 5

# FIG. 7

# FIG. 8

# FIG. 9

# FIG. 10

# FIG. 6

```
                                                    ┌─ 600
┌─────────────────────────────────────────┐
│            Receive log data               │
└─────────────────────────────────────────┘
                     │
                     ▼                         ┌─ 602
┌─────────────────────────────────────────┐
│          Calculate statistical model      │
└─────────────────────────────────────────┘
                     │
                     ▼                         ┌─ 604
┌─────────────────────────────────────────┐
│ Perform separation of intercept and       │
│      gradient of statistical model         │
└─────────────────────────────────────────┘
                     │
                     ▼                         ┌─ 606
┌─────────────────────────────────────────┐
│          Calculate wavelet model           │
└─────────────────────────────────────────┘
                     │
                     ▼                         ┌─ 608
┌─────────────────────────────────────────┐
│        Apply insertion to wavelet model    │
└─────────────────────────────────────────┘
                     │
                     ▼                         ┌─ 610
┌─────────────────────────────────────────┐
│     Process seismic data with wavelet model│
└─────────────────────────────────────────┘
                     │
                     ▼                         ┌─ 612
┌─────────────────────────────────────────┐
│   Calculate characteristic of earth and/or │
│                 image                      │
└─────────────────────────────────────────┘
```

# FIG. 11

```
                                              ┌─ 1100
        ┌──────────────────────────────────┐
        │        Select cost function      │
        └──────────────────────────────────┘
                         │
                         ▼                    ┌─ 1102
        ┌──────────────────────────────────┐
        │   Calculate intercept and gradient │
        └──────────────────────────────────┘
                         │
                         ▼                    ┌─ 1104
        ┌──────────────────────────────────┐
        │        Calculate reflectivity     │
        └──────────────────────────────────┘
                         │
                         ▼                    ┌─ 1106
        ┌──────────────────────────────────┐
        │          Calculate gather         │
        └──────────────────────────────────┘
                         │
                         ▼              ┌─ 1108              ┌─ 1110
        ┌──────────────────────────────┐      ┌──────────────────────────┐
        │     Minimize cost function   │◄─────│   Enforce normalization  │
        └──────────────────────────────┘      └──────────────────────────┘
                         │
                         ▼                    ┌─ 1112
        ┌──────────────────────────────────┐
        │   Generate wavelet model D(t,θ)   │
        └──────────────────────────────────┘
```

## FIG. 12

0   10   20   30   40 deg

2.5sec

3.0sec

## FIG. 13

0   10   20   30   40 deg

2.5sec

3.0sec

## FIG. 14

0   10   20   30   40 deg

2.5sec

3.0sec

## FIG. 15

0   10   20   30   40 deg

2.5sec

3.0sec

# FIG. 16

1600 ⟶

1602
Receive well log data

1604
Calculate intercept and gradient

1606
Calculate statistical model

1608
Calculate intercept and gradient from statistical model

1610
Select wavelet model structure

1612
Calculate reflectivity

1614
Calculate reconstructed gather

1616
Process recorded gather

1618
Select first inversion function

1622
Calculate Noise-Whitening operator

1624
Scale normalization

1620
Calculate parameters of wavelet function

1626
Calculate image and/or characteristic of earth

# FIG. 17

1700

CD-ROM 1716

Display 1720

Removable Media 1718

Server 1701

CD-ROM Drive 1714

Disk Drive 1712

User Input Interface 1722

Internet 1728

I/O 1708

1710

Processor 1702

RAM 1704

ROM 1706

Europäisches
Patentamt

European
Patent Office

Office européen
des brevets

# EUROPEAN SEARCH REPORT

Application Number

EP 17 30 5859

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ARILD BULAND ET AL: "Joint AVO inversion, wavelet estimation and noise-level estimation using a spatially coupled hierarchical Bayesian model", GEOPHYSICAL PROSPECTING, vol. 51, no. 6, 23 October 2003 (2003-10-23), pages 531-550, XP055428115, ISSN: 0016-8025, DOI: 10.1046/j.1365-2478.2003.00390.x | 1,2,6-14 | INV. G01V1/28 G01V1/30 |
| Y | * page 531 - page 545 * * page 548 - page 549 * | 4,5, 8-10,12 | |
| A | | 3,15 | |
| | ----- | | |
| X | GUNNING J ET AL: "Wavelet extractor: A Bayesian well-tie and wavelet extraction program", COMPUTERS AND GEOSCIENCES, PERGAMON PRESS, OXFORD, GB, vol. 32, no. 5, 1 June 2006 (2006-06-01), pages 681-695, XP027942908, ISSN: 0098-3004 [retrieved on 2006-06-01] | 1,2,4-7, 11,13,14 | |
| | | | TECHNICAL FIELDS SEARCHED (IPC) |
| | | | G01V |
| Y | * page 681 * * page 683 - page 689 * | 4,5, 8-10,12 | |
| A | * page 692 * | 3,15 | |
| | ----- | | |
| A | US 7 072 767 B2 (CONOCOPHILLIPS CO [US]) 4 July 2006 (2006-07-04) * column 8, line 11 - column 12, line 41 * | 1-15 | |
| | ----- | | |

The present search report has been drawn up for all claims

| Place of search | Date of completion of the search | Examiner |
|---|---|---|
| The Hague | 28 November 2017 | Sartoni, Giovanni |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 30 5859

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2017

| Patent document cited in search report | | Publication date | Patent family member(s) | | Publication date |
|---|---|---|---|---|---|
| US 7072767 | B2 | 04-07-2006 | US | 2004199330 A1 | 07-10-2004 |
| | | | WO | 2004095074 A2 | 04-11-2004 |

For more details about this annex : see Official Journal of the European Patent Office, No. 12/82

**REFERENCES CITED IN THE DESCRIPTION**

**Patent documents cited in the description**

- US 62363357 A